Europäisches Patentamt

European Patent Office

Office européen des brevets

(11) Veröffentlichungsnummer: **0 248 160 B1**

(19)

(12) **EUROPÄISCHE PATENTSCHRIFT**

(45) Veröffentlichungstag der Patentschrift: **15.07.92**

(21) Anmeldenummer: **87104324.6**

(22) Anmeldetag: **24.03.87**

(51) Int. Cl.⁵: **H02B 1/20**, H02G 5/02

(54) **Halter für stromführende Sammelschienen.**

(30) Priorität: **08.04.86 DE 8609413 U**

(43) Veröffentlichungstag der Anmeldung:
**09.12.87 Patentblatt 87/50**

(45) Bekanntmachung des Hinweises auf die
Patenterteilung:
**15.07.92 Patentblatt 92/29**

(84) Benannte Vertragsstaaten:
**AT DE NL**

(56) Entgegenhaltungen:
**DE-A- 3 321 441**
**DE-A- 3 409 211**
**DE-U- 7 226 748**

(73) Patentinhaber: **Lindner GmbH Fabrik elektrischer Lampen und Apparate
Lichtenhaidestrasse 15
W-8600 Bamberg(DE)**

(72) Erfinder: **Geus, Udo
Ahornweg 11
W-8608 Memmelsdorf(DE)**

(74) Vertreter: **Tergau, Enno et al
Patentanwälte Tergau & Pohl Postfach 11 93
47 Hefnersplatz 3
W-8500 Nürnberg 11(DE)**

EP 0 248 160 B1

**Beschreibung**

Die Erfindung betrifft einen Halter für stromführende Sammelschienen mit den im Oberbegriff des Anspruches 1 aufgeführten Merkmalen. Die Halter werden in erster Linie in Schaltschränken, Schaltgerüsten od.dgl. verwendet, in denen der Strom von den Sammelschienen abgegriffen wird. Die Sammelschienen weisen einen rechteckigen Querschnitt von je nach den Stromstärken unterschiedlichen Querschnittsbreiten auf. Die Querschnittsbreiten betragen bei den gängigen Sammelschienen 12,15,20,25 und 30 mm. Wegen der Dreiphasigkeit sind in der Regel drei als Flachkupferschienen ausgebildete Sammelschienen von einem Halter erfaßt. Die Sammelschienen verlaufen dabei mit Abstand zueinander auf derselben Höhe bzw. im selben Abstand zur Montageebene. Wegen der in Abhängigkeit von der Stromstärke unterschiedlichen Breite gängiger Sammelschienen ist gegebenenfalls eine Vielzahl von Haltertypen erforderlich, die mit Durchgangsquerschnitten unterschiedlicher Abmessungen für die Sammelschienen ausgestattet sind.

Um die Lagerhaltung einer Vielzahl von Haltertypen mit unterschiedlichen Durchgangsquerschnitten zu vereinfachen, ist es bereits bekannt, ein einheitlich gestaltetes Unterteil mit steckbaren Adapterteilen zu bestücken, die mit einem im wesentlichen U-förmigen Kopf den angepaßten Durchgangsquerschnitt für eine Sammelschiene bilden. Der Innenabstand zwischen den beiden U-Schenkeln dieser Adapterteile ist entsprechend den Breitenabmessungen gängiger Sammelschienen unterschiedlich. Durch diese steckbaren Adapterteile ist eine stufenweise Anpassung sowohl der Querschnittsbreite als auch der Querschnittshöhe der Durchgangsquerschnitte eines einheitlichen Halters möglich. Nachteilig ist daran die Notwendigkeit, eine Vielzahl von steckbaren Adapterteilen unterschiedlicher Ausbildung bereithalten zu müssen, was Herstellung und Lagerhaltung verteuert und den Zeitaufwand zum Heraussuchen und Einsetzen des richtigen Adapterteiles vergrößert.

Es ist des weiteren ein derartiger Halter mit einem einheitlich gestalteten Unterteil bekannt, auf welchem einzelne Kontaktklemmen verliersicher längsverschiebbar und dadurch unterschiedlichen Breitenabmessungen von Sammelschienen anpaßbar sind (DE-A 34 09 211).

Es ist weiterhin ein Halter bekannt, bei welchem sämtliche Adapterteile zu einer einheitlichen Adapterbrücke zusammengefaßt sind (DE-A-33 21 441). Die Adapterbrücke trägt auf ihrer Oberseite eine der Anzahl der Aufsätze des Unterteiles entsprechende Anzahl von Druckstegen, die durch gemeinsames Verschieben der Adapterbrücke gegenüber den Unterteil gemeinsam gegen die den Aufsätzen am Unterteil gegenüberliegende Seite der Sammelschienen bewegbar sind. In Anlagestellung der Stege ist die Adapterbrücke gegenüber dem Unterteil verrastbar, wobei die Verrastung durch das Aufdeckeln des die Sammelschienen von oben beaufschlagenden Oberteils gemeinsam bewirkt wird. Dabei liegen die Sammelschienen mit ihrer Bodenseite auf der Oberfläche der Adapterbrücke und nicht auf dem Unterteil des Halters selbst auf. Diese Adapterbrücke ist baulich sehr voluminös und damit teuer. Sie ermöglicht nur ein gemeinsames Verstellen der Anlagestege, was bei der Fixierung von Sammelschienen unterschiedlicher Querschnittsform im selben Halter zu Problemen führt. Außerdem kann die Montage derartiger Halter dadurch erschwert werden, daß die Sammelschienen mit ihrer Bodenfläche vollflächig auf der Adapterbrücke aufliegen und damit deren Einjustierung unter gewissen Bedingungen erschweren.

Der Erfindung liegt die Aufgabe zugrunde, einen Halter der eingangs genannten Art so auszugestalten, daß er zur sicheren Festlegung von Sammelschienen unterschiedlicher Querschnitte geeignet ist, ohne daß dies einen großen Handhabungs- und Kostenaufwand erfordert. Diese Aufgabe wird durch das im Kennzeichen des Anspruches 1 aufgeführte Merkmal gelöst. Hierzu ist jedem Durchgangsquerschnitt ein eigenes Adapterteil zugeordnet, welches dadurch leicht in seine Fixierstellung überführbar ist und durch welches auch in demselben Halter Sammelschienen unterschiedlicher Querschnitte festgelegt werden können. Auf die seitliche Festlegung kommt es bei derartigen Haltern besonders an, weil im Kurzschlußfall die auftretenden elektrodynamischen Kräfte ein Auseinandertreiben bzw. Zusammenziehen der Stromschienen bewirken. Aüßerdem ist es dadurch möglich, daß die Stromschienen zwischen ihren beiden seitlichen Auflagebereichen hohl liegen, was ebenfalls zur Aufnahme der im Betrieb auftretenden elektrodynamischen Kräfte der Sammelschienen von Vorteil ist. Schließlichlassen sich durch diese Ausbildung die Adapterteile besonders einfach in ihre Montageendstellung überführen, indem die Behinderungsmöglichkeiten durch die Sammelschienen selbst minimiert werden.

Durch die Kennzeichnungsmerkmale der Ansprüche 2 bis 6 lassen sich die Unterteile bereits von vornherein mit den Adapterteilen verliersicher verbinden, wobei diese Verbindung zweckmäßig so gestaltet ist, daß sie bei der Einjustierung der Adapterteile nicht aufgehoben werden muß.

Durch die Kennzeichnungsmerkmale der Ansprüche 7 und 8 besteht in Montageendstellung zwischen den Adapterteilen und dem Unterteil eine Formschlußverbindung, die den vorgenannten elektrodynamischen Kräften bei der späteren Nutzung entgegenwirkt.

Der Ausbildung nach den kennzeichnenden Teilen der Ansprüche 9 bis 12 liegt folgender Gedanke zugrunde: Die den elektrodynamischen Kräften entgegenwirkenden Stützflächen der Verzahnungen sollen in ihrer Gesamtheit möglichst groß sein. Es sollen aber möglichst geringe Kerbwirkungen auf die Adapterteile und das Unterteil Einfluß nehmen können. Hierzu dient die Feinteilung der Sägeverzahnung zwischen den Auflageflächen der Adapterteile und deren Gegenflächen am Unterteil, die im übrigen eine niedrige Bauart begünstigt. Die Fixierungen der Adapterteile mit einem Fixierzahn gegenüber der Gegenverzahnung an den Innenseiten der U-Schenkel dient hingegen zu einer Schnelleinstellung der Adapterteile auf den jeweiligen Soll-Querschnitt. Durch die Markierung gemäß dem Kennzeichnungsmerkmal des Anspruches 12 kann die Soll-Stellung der Adapterteile am Unterteil schon vor der Montage außerhalb der Einwirkung der Sammelschienen vorgenommen werden. Die jeweilige Einstellung läßt sich in einfacher Weise durch das Kennzeichnungsmerkmal des Anspruches 13 vornehmen. Das Kennzeichnungsmerkmal des Anspruches 14 sorgt dafür, daß ein Umstecken der Adapterteile in ihre der Breite einer Sammelschiene angepaßte Stellung am Unterteil möglich ist, ohne die Verliersicherung zwischen Unterteil und den Adapterteilen aufzuheben.

Der Gegenstand der Erfindung wird anhand der Figuren beispielsweise erläutert. Es zeigen:

Fig. 1     eine seitliche Explosionsansicht des Halters bestehend aus dem Unterteil, den Adapterteilen, dem Oberteil und den Befestigungsschrauben für das auf das Unterteil unter Einschluß der Adapterteile aufzudeckelnde Oberteil,

Fig. 2     einen vertikalen Längsschnitt durch das Oberteil des Halters,

Fig. 3     einen vertikalen Längsschnitt durch das Unterteil mit in Montageendstellung befindlichen Adapterteilen und geschnittenen Stromschienen,

Fig. 4     einen Schnitt entsprechend der Linie IV-IV in Fig. 3,

Fig. 5     eine Draufsicht auf das Unterteil mit eingesteckten Adapterteilen entsprechend Pfeil V in Fig. 3,

Fig. 6     einen vergrößerten Längsschnitt analog Fig. 3 durch den in Montageendstellung befindlichen Halter im Bereich einer Sammelschiene analog der Schnittdarstellung in Fig. 3,

Fig. 7     eine vergrößerte Draufsicht auf das Unterteil entsprechend Pfeil VII in Fig. 6 auf das Unterteil im Bereich eines Durchführungsbereiches der Stromschiene,

Fig. 8     einen Querschnitt entsprechend Fig. 4 einer modifizierten Ausführungsform des Adapterteiles,

Fig. 9     einen vergrößerten Längsschnitt analog Fig. 6 durch einen mit dem Adapterteil gemäß Fig. 8 versehenen Halter im Bereich einer Sammelschiene,

Fig. 10     eine Draufsicht auf das Unterteil analog Fig. 7 in der für das Adapterteil gemäß Fig. 8 bestimmten Ausführungsform.

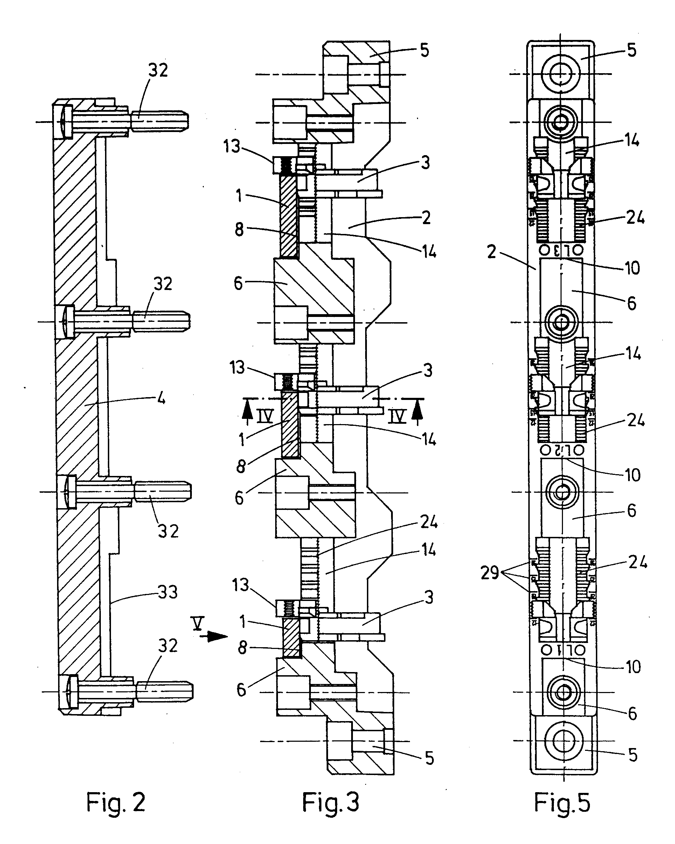

Der Halter zur Festlegung der stromführenden Sammelschienen 1 besteht aus dem ortsfest fixierbaren Unterteil 2, den Adapterteilen 3 und dem Oberteil 4. Diese Teile bestehen sämtlich aus einem Isolierwerkstoff. Sie sind insbesondere aus einem Kunststoff gespritzt. Das Unterteil (2) ist mit seinen beiden Enden 5 ortsfest z.B. an einer Wand fixierbar. Das Unterteil 2 trägt auf seiner Oberfläche mehrere Aufsätze 6, die in Längsrichtung des Unterteiles 2 in einem vorzugsweise gleichen Abstand 7 verteilt angeordnet sind. Rechts neben einem jeden Aufsatz 6 (Fig. 3,6,9) befindet sich jeweils ein Durchgang für eine lotrecht zur Zeichnungsebene verlaufende Sammelschiene 1.

Die Adapterteile 3 sind in den Durchgängen zwischen den Aufsätzen 6 am Unterteil 2 fixierbar und begrenzen dadurch auf ihrer Seite den Durchgang für die benachbarte Sammelschiene 1. Die Adapterteile 3 sind in mehreren in Längsrichtung des Unterteils 2 angeordneten Positionen mit dem Unterteil 2 verrast- bzw. auf dieses aufsteckbar und insgesamt verliersicher gehalten.

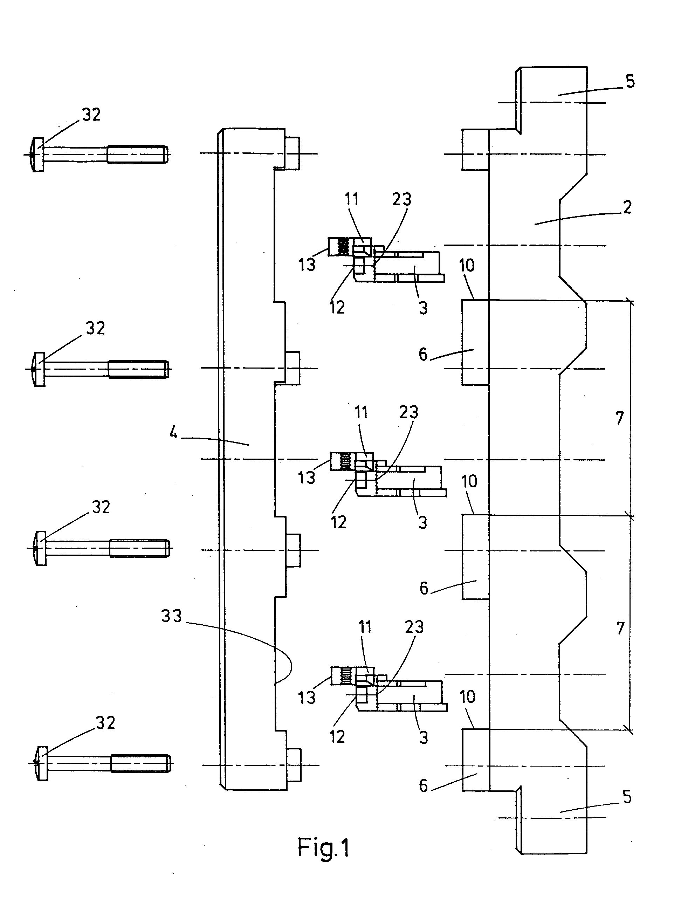

Die Aufsätze 6 stellen auf der einen Seite eine Seitenbegrenzung für die ihnen benachbarte Sammelschiene 1 dar. Neben dem jeweiligen Aufsatz 6 liegt eine jede Sammelschiene mit ihrem einen Seitenbereich auf einer Grundfläche 8 des Unterteils 2 auf. Zur Erzielung einer Punktlagerung kann die Grundfläche 8 mit konvex nach oben vorstehenden Auflagenoppen 9 für die eine Seite einer Sammelschiene 1 versehen sein. Die Seitenbegrenzungsfläche 10 des Aufsatzes 6 bildet also mit der Grundfläche 8 das Unterschenkels 2 einen rechten Winkel zur Sammelschieneneinlage an deren einer Seite. Das Gegenstück dieser Sammelschieneneinlage auf deren anderer Seite bildet das Adapterteil 3. Hierzu ist der Kopf 11 eines jeden Adapterteiles 3 etwa in Form eines rechten Winkels (Fig. 1) ausgebildet, dessen Horizontalschenkel 12 eine Auflage für den anderen Seitenbereich der Sammelschiene 1 und dessen Vertikalschenkel 13 die andere Seitenbegrenzung des Durchganges für die Sammelschiene 1 bildet.

Das Unterteil 2 ist im Bereich der Durchgänge für die Sammelschienen 1 mit jeweils einer in Längsrichtung verlaufenden Durchgangsnut 14 versehen, die von einem Verklammerungsvorsprung 15,16 des Adapterteiles 3 durchsetzt ist.

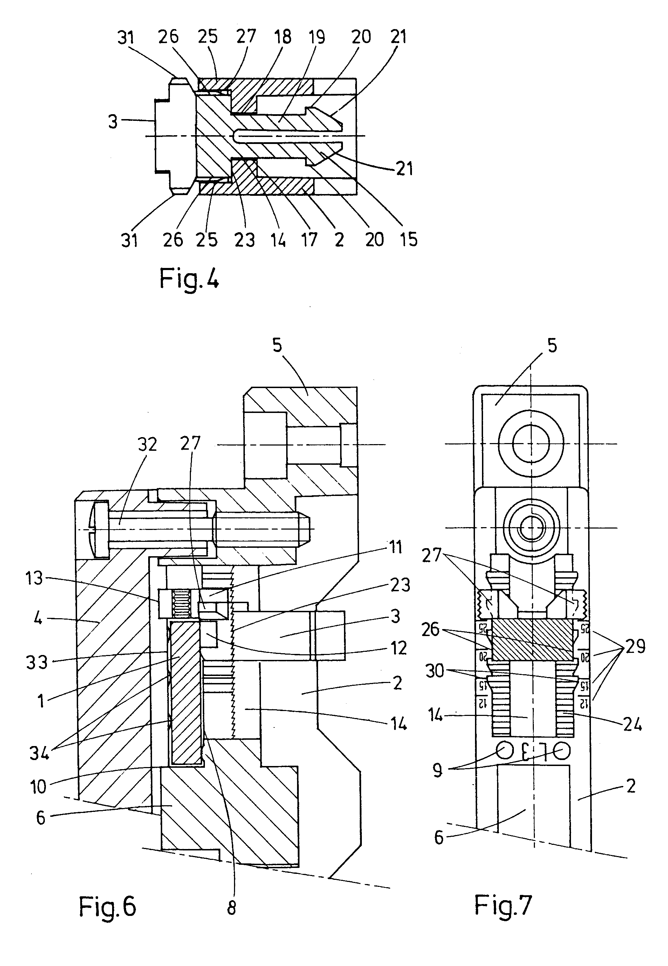

Bei der Ausführungsform gemäß Fig. 4 enthält der Verklammerungsvorsprung 16 zwei in Abstand nebeneinanderliegende, die Seitenwände 17,18 der Durchgangsnut 14 flankierende Federschenkel 19, die an ihren unterhalb der Durchgangsnut 14 liegenden Enden mit voneinander abgewandten, die Seitenwände 17,18 der Durchgangsnut 14 hintergreifenden Vorsprüngen 20 als Verliersicherung versehen sind. An die Vorsprünge 20 angeformte Aufschiebeschrägen 21 dienen zur Erleichterung der Einführung der Federschenkel 19 in die Durchgangsnut 14. Beim Einführen der Federschenkel 19 in die Durchgangsnut 14 biegen die Federschenkel 19 leicht nach innen aus und schnappen nach dem Durchführen der Vorsprünge 20 wieder in ihre in Fig. 2 dargestellte Ausgangsstellung auseinander.

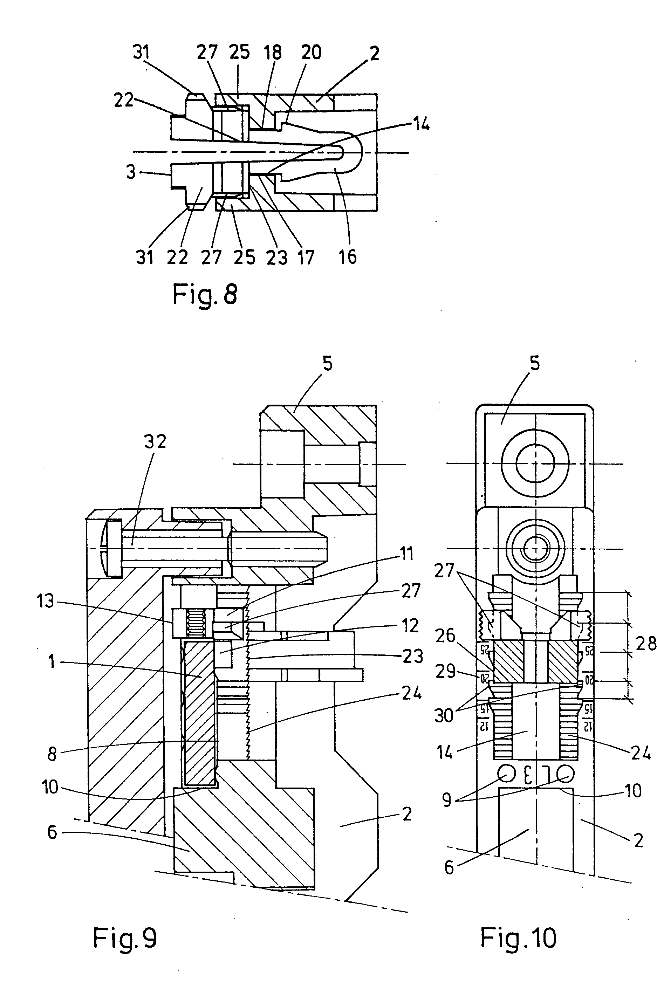

Das Adapterteil 3 in der Ausführungsform gemäß Fig. 8 unterscheidet sich von der in Fig. 4 dargestellten Ausführungsform durch die Form seines Verklammerungsvorsprunges 16. Es weist rechtwinklig zum Nutverlauf die Querschnittsform etwa eines U auf, dessen U-Schenkel 22 unter einem vorgespannten Spreizdruck an den Seitenwänden 17,18 der Durchgangsnut 14 anliegen. Unterhalb der Durchgangsnut 14 sind die U-Schenkel 22 ebenfalls mit die Seitenwände 17,18 der Durchgangsnut 14 hintergreifenden Vorsprüngen 20 als Verliersicherung versehen.

Die gegenseitigen Anlageflächen des Unterteils 2 und der Adapterteile 3 stehen in gegenseitigem, eine Relativbeweglichkeit in Längsrichtung sperrendem Verzahnungseingriff. Zu diesem Zweck sind die Auflagefläche 23 der Horizontalschenkel 12 der Adapterteile 3 und die mit dieser zusammenwirkende Oberfläche 24 des Unterteiles 2 sägezahnartig ausgebildet. Die beiden Sägezahnprofile liegen formschlüssig ineinander. Dabei liegen in Anlagestellung die Sägezähne der Adapterteile 3 in von der zugeordneten Sammelschiene abgewandter Richtung mit einem etwa rechtwinklig zur Längsrichtung verlaufenden Flankenwinkel an den Gegenflanken des Unterteils 2 an (Fig. 3,5,6,7,9 und 10). Durch den gegenseitigen Eingriff der Sägezahnprofile von Auflagefläche 23 und Oberfläche 24 des Unterteiles 2 können die Adapterteile in Auflagestellung leicht in Richtung auf ihre zugehörige Sammelschiene 1 verschoben werden, während eine Verschiebung in Gegenrichtung durch Formschlußeingriff gesperrt ist.

Die Oberseite des Unterteils 2 ist U-förmig ausgemuldet. Dabei liegen die Adapterteile 3 zwischen den U-Schenkeln 25. Sie stehen dabei nicht nur mit ihrer Auflagefläche 23, sondern auch mit ihren Seitenflächen 26 in einem Verzahnungseingriff mit den Innenflächen der U-Schenkel 25 des Unterteils 2. Dabei sind die von den U-Schenkeln 25 flankierten Seitenflächen 26 der Adapterteile 3 mit jeweils einem Fixierzahn 27 versehen, während die Gegenzahnlücken an den Innenseiten der U-Schenkel 25 mit einer den Breitenabmessungen gängiger Sammelschienen (12,15,20,25 und 30 mm) entsprechenden Teilung 28 versehen sind.

Das Unterteil 2 ist auf der Stirnseite mindestens eines seiner U-Schenkel 25 mit einer Markierung 29 versehen, die die Zuordnung der jeweiligen Gegenzähne 30 an den Innenseiten der U-Schenkel 25 zu einer Breitenabmessung üblicher Sammelschienen angibt.

Die Adapterteile 3 stehen mit ihrem Kopf 11 über die Oberseite des Unterteils 2 hinaus. Die Köpfe 11 sind an ihren in Längsrichtung verlaufenden Seiten mit einer griffreundlichen Riffelung 31 versehen. Bei der Ausführungsform des Adapterteiles 3 gemäß Fig. 4 weisen die Federschenkel 19 eine solche Länge auf, daß ihre Verliersicherungs-Vorsprünge 20 in Montageendstellung mit einem Abstand unterhalb der Durchgangsnut 14 liegen, der mindestens so groß ist wie die Höhe der U-Querschnittsform bzw. wie die Länge der U-Schenkel 25 der Oberseite des Unterteils 2.

Mit dem erfindungsgemäßen Halter werden die Sammelschienen wie folgt festgelegt: Die Adapterteile 3 sind bereits verliersicher mit dem Unterteil 2 verbunden. In jede Durchgangsnut 14 eines Unterteils 2 ist ein Adapterteil 3 eingesetzt. Bei der Ausführungsform des Adapterteiles 3 gemäß Fig. 4 wird dieses mit seinem Fixierzahn 27 in die zutreffende Gegenzahnlücke 30 von oben eingeführt. Die Gegenzahnlücke ist durch die Markierung 29 in einfacher Weise auswählbar. Nach der Durchführung der Sammelschienen 1 liegen diese beidseitig begrenzt durch einen Aufsatz 6 und einen Vertikalschenkel des Kopfes 11 des Adapterteiles 3 auf einerseits den Noppen 8 des Unterteils 2 und andererseits dem Horizontalschenkel 12 des Adapterteils 3 auf.

Um mit dem Adapterteil 3 in der Ausführungsform gemäß Fig. 8 diese Einlagestellung zu erzielen, brauchen die Adapterteile 3 nicht nach oben aus ihrer Seitenverrastung mit den U-Schenkeln 25 des Unterteiles 2 herausgezogen zu werden. Vielmehr werden die oberen Enden der beiden U-Schenkel lediglich an ihren Riffelungen 31 federnd zusammengedrückt, so daß die Fixierzähne 27 außer Eingriff mit den Gegenzahnlücken 30 an den U-Schenkeln 25 gelangen. Sodann können die Adapterteile 3 in Längsrichtung auf ihre zugehörige Sammelschiene 1 verschoben werden, bis ihr Vertikalschenkel 13 an eine Sammelschiene 1 anschlägt. Durch einfaches Loslassen an der Riffelung 31 federn die Fixierzähne 27 zurück in eine dort vorhandene Gegenzahnlücke 30 und stellen somit die gewünschte allseitige Anlage für die durchgeführte Sammelschiene 1 her.

Zur endgültigen Fixierung wird das Oberteil 4 auf das Unterteil 2 aufgedeckt und mit den

Schrauben 32 fixiert. Dabei beaufschlagt die Bodenfläche 33 des Oberteils 4 mit aus ihr vorstehenden, eine Punktanlage gewährleistenden Noppen 34 die Sammelschienen 1 unmittelbar und hält diese in ihrer Einlagestellung am Unterteil (Fig. 6,9).

Bezugszeichenliste

1 Sammelschiene
2 Unterteil
3 Adapterteil
4 Oberteil
5 Ende
6 Aufsatz
7 Abstand
8 Grundfläche
9 Auflagenoppen
10 Seitenbegrenzungsfläche
11 Kopf
12 Horizontalschenkel
13 Vertikalschenkel
14 Durchgangsnut
15 Verklammerungsvorsprung
16 Verklammerungsvorsprung
17 Seitenwand
18 Seitenwand
19 Federschenkel
20 Vorsprung
21 Aufschiebeschräge
22 U-Schenkel
23 Auflagefläche
24 Oberfläche
25 U-Schenkel
26 Seitenfläche
27 Fixierzahn
28 Teilung
29 Markierung
30 Gegenzahnlücke
31 Riffelung
32 Schrauben
33 Bodenfläche
34 Noppen

**Patentansprüche**

1. Halter zur Festlegung stromführender Sammelschienen (1) mit jeweils aus Isolierwerkstoff, insbesondere einem Kunststoff, bestehend
   - einem ortsfest fixierbaren Unterteil (2),
     -- welches auf seiner Oberfläche in Längsrichtung in einem vorzugsweise gleichen Abstand (7) verteilt mehrere Aufsätze (6) mit zwischen diesen liegenden Durchgängen für jeweils eine rechtwinklig zur Längsrichtung durchzuführende Sammelschiene (1) aufweist,
   - in den Durchgängen zwischen den Aufsätzen (6) am Unterteil (2) fixierbaren, einzelnen Adapterteilen (3) zur Anpassung insbesondere der Breite eines Durchganges an den Querschnitt der jeweiligen Sammelschiene (1) und
   - einen auf das Unterteil (2) aufdeckelbaren, die in den Durchgängen einliegenden Sammelschienen (1) von oben beaufschlagenden Oberteil (4), wobei im Bereich der Durchgänge die Adapterteile (3) in mehreren in Längsrichtung verteilt angeordneten Positionen mit dem Unterteil (2) verliersicher verbindbar sind,
     dadurch gekennzeichnet,
   daß die Adapterteile (3) einzeln mit dem Unterteil (2) insbesondere verrast- oder daraüf aufsteckbar sind und
   daß die den Aufsätzen (6) auf der Anlageseite einer Sammelschiene benachbarten Oberflächenbereiche des Unterteiles (2) eine Auflage (9) für den einen Seitenbereich einer jeden Sammelschiene (1) bilden, während der Kopf (11) der Adapterteile (3) die Form etwa eines rechten Winkels aufweist,
   - dessen Horizontalschenkel (12) eine Auflage für den anderen Seitenbereich der Sammelschiene (1) und
   - dessen Vertikalschenkel (13) eine Seitenbegrenzung des Durchganges bilden.

2. Halter nach Anspruch 1 ,
     dadurch gekennzeichnet,
   daß die Adapterteile (3) in die Oberfläche des Unterteiles (2) formschlüssig eingreifen und durch Anzug des Oberteiles (4) in Aufdeckelrichtung in seine Fixierstellung gegenüber dem Unterteil (2) gedrückt werden.

3. Halter nach einen der vorhergehenden Ansprüche,
     dadurch gekennzeichnet,
   daß das Unterteil (2) im Bereich der Durchgänge jeweils eine in Längsrichtung verlaufende Durchgangsnut (14) aufweist,
   - die von einem Verklammerungsvorsprung (15,16) des Adapterteiles (3) durchsetzt ist.

4. Halter nach Anspruch 3,
     dadurch gekennzeichnet,
   daß der Verklammerungsvorsprung (15) zwei in Abstand nebeneinanderliegende, die Seitenwände (17,18) der Durchgangsnut (14) flankierende Federschenkel (19) aufweist,
   - die an ihren unterhalb der Durchgangsnut (14) liegenden Ende mit voneinander abgewandten, die Seitenwände (17,18)

der Durchgangsnut (14) hintergreifenden Vorsprüngen (20) als Verliersicherung versehen sind.

5. Halter nach Anspruch 4, gekennzeichnet durch an die Vorsprünge (20) angeformte Aufschiebeschrägen (21) zur Erleichterung der Einführung der Federschenkel (19) in die Durchgangsnut (14).

6. Halter nach einem der Ansprüche 3 bis 5, dadurch gekennzeichnet, daß das Adapterteil (3) rechtwinklig zum Nutverlauf die Querschnittsform etwa eines U aufweist, dessen U-Schenkel (22) unter einem vorgespannten Spreizdruck am Unterteil anliegen.

7. Halter nach einem oder mehreren der vorhergehenden Ansprüche, dadurch gekennzeichnet, daß die Anlageflächen des Unterteiles (2) und der Adapterteile (3) in gegenseitigem, eine Relativbeweglichkeit in Längsrichtung sperrenden Verzahnungseingriff stehen.

8. Halter nach Anspruch 7, gekennzeichnet durch eine sägezahnartige Ausbildung des Verzahnungsprofils derart, daß in Anlagestellung die Zähne der Adapterteile (3) in von der zugeordneten Sammelschiene (1) abgewandter Richtung mit etwa rechtwinklig zur Längsrichtung verlaufendem Flankenwinkel an den Gegenflanken des Unterteils (2) anliegen.

9. Halter nach einem oder mehreren der vorhergehenden Ansprüche, gekennzeichnet durch einen U-förmigen Querschnitt der Oberseite des Unterteils (2) mit zwischen den U-Schenkeln einliegenden Adapterteilen (3), wobei die Adapterteile (3) sowohl mit ihrer Auflage-(23) als auch mit ihren Seitenflächen (26) in einem Verzahnungseingriff mit den Innenflächen der U-Schenkel (25) des Unterteils (2) stehen.

10. Halter nach einem oder mehreren der vorhergehenden Ansprüche, gekennzeichnet durch eine Feinteilung der Sägeverzahnung zwischen den Auflageflächen (23) der Adapterteile (3) und deren Gegenflächen des Unterteils (2) etwa nach Art einer Raspelhieb-Riffelung.

11. Halter nach Anspruch 9 oder 10, dadurch gekennzeichnet,

daß die von den U-Schenkeln (25) flankierten Seitenflächen (26) der Adapterteile (3) mit einem Fixierzahn (27) versehen sind, während die Gegenverzahnung an den Innenseiten der U-Schenkel (25) mit einer den Breitenabmessungen gängiger Sammelschienen (1) entsprechenden Teilung (28) versehen ist.

12. Halter nach Anspruch 11, dadurch gekennzeichnet, daß das Unterteil (2) auf der Stirnseite mindestens eines seiner U-Schenkel (25) mit einer Markierung versehen ist, die die Zuordnung der jeweiligen Gegenzahnlücken (30) an den Innenseiten der U-Schenkel (25) zu einer Breitenabmessung üblicher Sammelschienen angibt.

13. Halter nach einem oder mehreren der vorhergehenden Ansprüche, dadurch gekennzeichnet, daß die Adapterteile (3) mit einem Kopf (11) über die Oberseite des Unterteils (2) hinausstehen und daß die Köpfe (11) an ihren vorzugsweise in Längsrichtung verlaufenden Seiten mit einer griffreundlichen Riffelung (31) versehen sind.

14. Halter nach einem oder mehreren der vorhergehenden Ansprüche, gekennzeichnet durch eine derartige Länge der Federschenkel (19), daß ihre Verliersicherungsvorsprünge (20) in Montageendstellung der Adapterteile (3) mit einem Abstand unterhalb der Durchgangsnut (14) liegen, der mindestens so groß ist wie die Höhe der U-Querschnittsform der Oberseite des Unterteils (2).

**Claims**

1. A support for fixing live bus bars (1), with
   - a locally fixable base (2),
     -- which has on its surface, distributed in the longitudinal direction preferably at an equal distance (7), several projecting parts (6) with clearances for one bus bar (1) respectively to be passed through at right angles to the longitudinal direction,
   - individual adapter parts (3) fixable on the base (2) in the clearances between the projecting parts (6) for adapting in particular the width of a clearance to the cross-section of the respective bus bar (1) and
   - a top (4) fittable as a cover on the base (2) and pressing on the bus bars (1) lying in the clearances,

each consisting of an insulating material, in particular a plastic, in which arrangement the adapter parts (3) can be arranged in the zone of the clearances in several positions distributed over the longitudinal direction, and be securely connected to the base (2),

characterized in

that the adapter parts (3) can in particular be individually engaged with the base (2) or be fitted thereon, and

that the surface zones of the base (2) adjacent to the projecting parts (6) on the bearing surface of a bus bar form a support (9) for one lateral zone of each bus bar (1), whilst the head (11) of the adapter parts (3) has approximately the shape of a right angle,

- whose horizontal arm (12) forms a support for the other lateral zone of the bus bar (1) and
- whose vertical arm (13) forms a side boundary for the clearance.

2. A support according to claim 1, characterized in that the adapter parts (3) conjugately engage in the surface of the base (2) and are pressed towards the base (2) by tightening the top (4) into its fixed position in the lid application direction.

3. A support according to one of the preceding claims, characterized in that the base (2) has in the zone of the clearances one through groove (14) extending in the longitudinal direction,
- which is traversed by a clamping projection (15, 16) of the adapter part (3).

4. A support according to claim 3, characterized in that the clamping projection (15) has two resilient arms (19) lying side by side at a distance from each other and flanking the side walls (17, 18) of the through groove (14),
- which are provided at their ends lying below the through groove (14) with projections (20) gripping the side walls (17, 18) of the through groove (14) from behind as a safeguard against detachment.

5. A support according to claim 4, characterized by slanting fitting surfaces (21) formed on the projections (20) to facilitate the insertion of the resilient arms (19) into the through groove (14).

6. A support according to one of claims 3 to 5, characterized in that, at right angles to the direction of the groove, the adapter part (3) is approximately U-shaped in cross section, the sides (22) of which U bear on the base with a prestressed expanding pressure.

7. A support according to one or more of the preceding claims, characterized in that the contact surfaces of the base (2) and of the adapter part (3) are arranged in a mutually interlocking engagement blocking any relative movability in the longitudinal direction.

8. A support according to claim 7, characterized by a sawtooth-type design of the rack section in such a way that in the bearing position, the teeth of the adapter parts (3) bear on the mating flanks of the base (2) in the direction facing away from the associated bus bar (1) with a flank angle extending approximately at right angles to the longitudinal direction.

9. A support according to one or more of the preceding claims, characterized by a channel-shaped cross-section of the top of the base (2) with adapter parts (3) lying between the channel sides, the adapter parts (3) being disposed both with their bearing surfaces (23) and their side surfaces (26) in an interlocking engagement with the internal surfaces of the channel sides (25) of the base (2).

10. A support according to one or more of the preceding claims, characterized by a fine graduation of the sawtooth system between the bearing surfaces (23) of the adapter parts (3) and their mating surfaces of the base (2), approximately in the manner of a rasp cut serration.

11. A support according to claim 9 or 10,, characterized in that the side surfaces (26) of the adapter parts (3) flanked by the channel sides (25) are provided with a positioning tooth (27), whilst the mating tooth system on the internal side of the channel sides (25) is provided with a spacing (28) corresponding to the width dimensions of the currently used bus bars (1).

12. A support according to claim 11, characterized in that

the base (2) is provided on the front face of at least one of its channel-sides (25) with a marking which indicates the matching of the respective mating tooth gaps (30) on the internal sides of the channel sides (25) with a width dimension of conventional bus bars.

13. A support according to one or more of the preceding claims,
characterized in that
the adapter parts (3) project above the top of the base (2) with a head (11) and that the heads are provided with a grip-promoting fluting (31).

14. A support according to one or more of the preceding claims,
characterized by
such a length of the resilient arms (19) that their projections (20) preventing detachment lie in the assembled position of the adapter parts (3) at a distance below the through groove (14) which is at least as great as the height of the channel-shaped cross-section of the top of the base (2).

## Revendications

1. Support pour la fixation de barres omnibus (1) transmettant du courant, comportant, réalisées chacune en matière isolante, notamment en matière plastique,
   - une partie inférieure (2) immobilisable,
   -- laquelle présente plusieurs pièces rapportées (6) qui sont réparties de préférence à intervalles égaux (7) et comprennent entre elles des passages destinés chacun à une barre omnibus (1) passant perpendiculairement à la direction longitudinale,
   - des pièces d'adaptation individuelles (3) pouvant être fixées à la partie inférieure (2), dans les passages entre les pièces rapportées (6), afin d'adapter notamment la largeur d'un passage à la section droite de la barre omnibus concernée (1), et
   - une partie supérieure (4) applicable sur la partie inférieure (2), sollicitant par le haut les barres omnibus (1) situées dans les passages, lesdites pièces d'adaptation (3) dans la région des passages pouvant être liées de manière imperdable à la partie inférieure (2), dans plusieurs positions réparties sur la direction longitudinale,
   caractérisé
   - par le fait que les pièces d'adaptation (3) peuvent être individuellement liées à la partie inférieure, notamment par enclenchement ou par emboîtement sur celle-ci, et
   - par le fait que les régions superficielles de la partie inférieure (2) voisines des pièces rapportées sur le côté appui d'une barre omnibus forment un appui (9) pour la première région latérale de chaque barre omnibus (1), tandis que la tête (11) des pièces d'adaptation (3) présente la forme d'une équerre à angle droit,
   - dont la branche horizontale (12) forme un appui pour l'autre région latérale de la barre omnibus (1) et
   - dont la branche verticale (13) forme une limitation latérale du passage.

2. Support selon revendication 1,
caractérisé par le fait que les pièces d'adaptation (3) s'engagent, avec formation d'une liaison mécanique positive, dans la surface de la partie inférieure (2) et sont poussées par le rapprochement de la partie supérieure (4) en direction du couvercle, à sa position de fixation en face de la partie inférieure (2).

3. Support selon revendication 1,
caractérisé
par le fait que la partie inférieure (2) présente, dans la région de chacun des passages, une rainure de passage (14) s'étendant en direction longitudinale, laquelle est traversée par un saillant d'attache (15, 16) de la pièce d'adaptation (3).

4. Support selon revendication 3,
caractérisé
par le fait que le saillant d'attache (15) présente deux branches élastiques (19) situées côte à côte tout en étant séparées par un intervalle, lesquelles bordent la rainure de passage (14), et, en leur extrémité située en dessous de la rainure de passage (14), sont munies de saillants (20) s'écartant l'un de l'autre, lesquels forment des retenues derrière les parois latérales (17, 18) de la rainure de passage (14) et font office de moyens de sécurité imperdables.

5. Support selon revendication 4,
caractérisé
par des chanfreins ou rampes d'emboîtement (21) formés sur les saillants (20) afin de faciliter l'introduction des branches élastiques (19) dans la rainure de passage (14).

6. Support selon l'une des revendications 3 à 5,
caractérisé

par le fait que la pièce d'adaptation (3) présente, perpendiculairement au tracé de la rainure, une section droite sensiblement en forme de U dont les branches (22) s'appliquent contre la partie inférieure sous une pression d'expansion obtenue par précontrainte.

7. Support selon une ou plusieurs des revendications précédentes,
caractérisé
par le fait que les surfaces de contact de la partie inférieure (2) et des pièces d'adaptation (3) sont en prise mutuelle par indentations interdisant une mobilité relative en direction longitudinale.

8. Support selon revendication 7,
caractérisé
par une configuration en dents de scie du profil d'indentation, de manière telle que, dans la position de contact, les dents des pièces d'adaptation (3) s'appliquent contre les flancs opposés de la partie inférieure (2), cela dans la direction s'éloignant de la barre omnibus conjuguée (1), avec un angle de flanc sensiblement perpendiculaire à la direction longitudinale.

9. Support selon une ou plusieurs des revendications précédentes,
caractérisé
par une section droite en forme de U du côté supérieur de la partie inférieure (2), avec des pièces d'adaptation (3) situées entre les branches du U, les pièces d'adaptation (3) étant, aussi bien par leurs surfaces d'appui que par leurs surfaces latérales (26), en prise d'indentation avec les surfaces intérieures des branches (25) du U de la partie inférieure (2).

10. Support selon une ou plusieurs des revendications précédentes,
caractérisé
par le fait que la denture en dents de scie entre les surfaces d'appui (23) des pièces d'adaptation (3) et les surfaces conjuguées de la partie inférieure (2) présente un pas fin, sensiblement du genre striure de rape.

11. Support selon revendication 9 ou 10,
caractérisé
par le fait que les surfaces latérales (26) des pièces d'adaptation (3) bordées par les branches du U sont munies d'une dent de fixation (27), tandis que la denture conjuguée sur les côtés intérieurs des branches du U (25) est dotée d'un pas (28) correspondant aux dimensions de largeur de barres omnibus courantes (1).

12. Support selon revendication 11,
caractérisé
par le fait que, sur le côté frontal d'au moins l'une de ses branches de U (25), la partie inférieure (2) est munie d'une marque indiquant l'affectation des créneaux (30) conjugués aux dents, situés sur les côtés intérieurs des branches de U, pour une largeur de barres omnibus usuelles.

13. Support selon une ou plusieurs des revendications précédentes,
caractérisé
par le fait que les pièces d'adaptation (3) ont une tête (11) par laquelle elles débordent au-delà du côté supérieur de la partie inférieure (2), et par le fait qu'en leurs côtés s'étendant de préférence en direction longitudinale, les têtes (11) sont munies d'une striure (31) facilitant la prise.

14. Support selon une ou plusieurs des revendications précédentes,
caractérisé
par une longueur des branches élastiques (19) telle que, lorsque les pièces d'adaptation (3) sont en position de montage finale, les saillants (20) d'imperdabilité se trouvent en dessous de la rainure de passage (14), à une distance de celle-ci au moins aussi grande que la hauteur de la forme en U de la section droite du côté supérieur de la partie inférieure (2).

Fig.1

Fig. 2

Fig. 3

Fig. 5

Fig.4

Fig.6

Fig.7

Fig. 8

Fig. 9

Fig. 10